# EUROPEAN PATENT APPLICATION

(11) **EP 4 574 679 A1**
(43) Date of publication of application: **25.06.2025**
(21) Application number: 24220230.7
(22) Date of filing: 16.12.2024
(51) Int. Cl.: B64D 47/02, B64D 47/08, G06V 10/141, G06V 20/56

(54) **AUTOMATIC AIRCRAFT LIGHTING CONTROL SYSTEM**

(30) Priority: 19.12.2023 US 202318545111
(71) Applicant: ROSEMOUNT AEROSPACE INC., Burnsville, MN 55306-4898 (US)
(72) Inventor: WALZ, Christine, Edina, MN (US); FALZONE, Lindsey, Lakevile, MN (US); EUCKEN, Douglas, Lakeville, MN (US)
(74) Representative: Dehns

(57) **Abstract**

An automatic aircraft lighting control system can include a control module. The control module can be configured to receive imaging data from one or more cameras (106) operatively associated with the aircraft and automatically control external aircraft lights (108) based on the imaging data.

## Description

### FIELD

This disclosure relates to an automatic aircraft lighting control system.

### BACKGROUND

External aircraft lights provide visibility for pilots while operating an aircraft. The external aircraft lights needed vary based on different conditions, for example, phase of flight and weather conditions affecting visibility. There are several different types of external lights on commercial an aircraft, and they are used for different types of situations (e.g., taxi, landing, aircraft situation and heading). Most commercial aircraft lighting controls are located on the flight deck overhead panel or center pedestal. There are checklists for ground maneuvers (e.g., gate push back or gate entry) which dictate the state some of the external lights should be in. There are also a variety of other light activation/deactivation situations (e.g., inclement weather, cloud cover, night/dusk takeoff and landing).

Such conventional methods and systems have generally been considered satisfactory for their intended purpose. However, there is still a need in the art for more efficient lighting control systems for aircraft exterior lights. The present disclosure provides a solution for this need.

### SUMMARY

An automatic aircraft lighting control system can include a control module. The control module can be configured to receive imaging data from one or more cameras operatively associated with the aircraft and automatically control external aircraft lights based on the imaging data. The control module can be further configured to receive aircraft data from one or more aircraft systems and automatically control the external aircraft lights based on the aircraft data.

In certain embodiments, the control module can include a situational awareness module configured to determine which external aircraft lights to activate and/or deactivate based on at least one of the imaging data and/or the aircraft data. The control module can include an image processing module configured to be operatively connected to the one or more cameras to receive imaging data therefrom. The image processing module can be connected to the situational awareness module to send image processing data thereto. The situational awareness module can be configured to receive the image processing data to output one or more control signals based on the image processing data.

In certain embodiments, the imaging data can include at least one of weather data, flight phase data, location of aircraft data, obstruction data, and/or safety issue data. In certain embodiments, the aircraft data can include at least one of engine data, altitude data, speed data, and/or aircraft weight on wheels data.

In certain embodiments, the automatic aircraft lighting control system can further include an exterior lighting control box configured to be operatively connected to the situational awareness module. The exterior lighting control box can also be configured to display a status of the exterior aircraft lights to flight crew. The exterior lighting control box can include a control panel having an automatic mode and a manual mode.

In certain embodiments, in the automatic mode the exterior aircraft lights are controlled solely by the control module without pilot interference. In certain embodiments, in the manual mode, the automatic mode can be overridden to manually control the exterior aircraft lights via an on/off switch on the control panel.

In certain embodiments, the control module can be configured to activate and/or deactivate the exterior aircraft lights based on known light settings for commercial aircraft external light systems. The known light settings can vary based on at least one of external light conditions, weather/visibility conditions, and/or phase of flight. In certain embodiments, each of the exterior aircraft lights can be controlled independently.

In accordance with at least one aspect of this disclosure, a control module can include a situational awareness module configured to determine when to control exterior aircraft lights based on at least one of imaging data and/or aircraft data. The situational awareness module can be configured to receive the imaging data from an image processing module. The image processing module can be configured to receive the image processing data from at least one exterior aircraft camera.

In certain embodiments, the situational awareness module can be configured to communicate with an exterior lighting control box. The exterior lighting control box can be configured to be operatively connected to the situational awareness module and configured to display a status of the exterior aircraft lights to flight crew.

In accordance with at least one aspect of this disclosure, a non-transitory computer readable medium can include computer executable instructions for performing a method. The method can include receiving imaging data from one or more exterior aircraft cameras, sending the imaging data to an image processing module, receiving the image processing data and aircraft data within a situational awareness module and determining when to activate/deactivate the exterior aircraft lights based on the image processing data and the aircraft data received within the situational awareness module.

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic view of an embodiment of an automatic aircraft lighting control system in accordance with this disclosure;
Fig. 2 is a schematic view of another embodiment of an automatic aircraft lighting control system in accordance with the present disclosure; and
Fig. 3A-3D is a chart showing standard exterior lighting requirements for various phases of flight.

### DETAILED DESCRIPTION

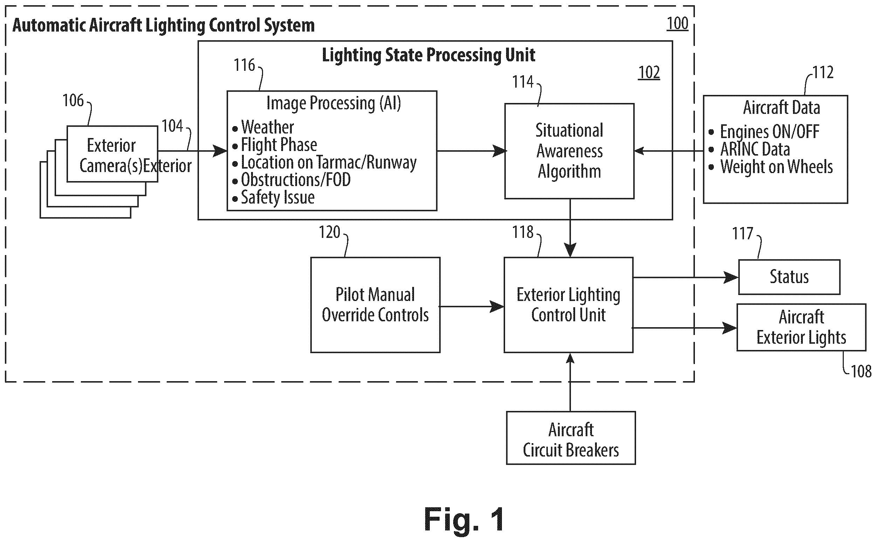

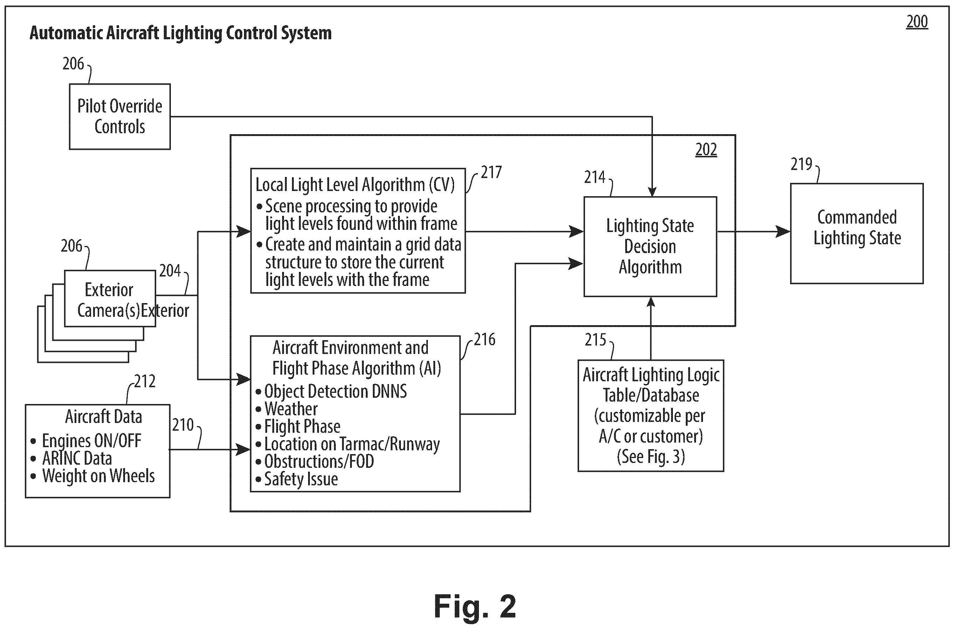

Reference will now be made to the drawings wherein like reference numerals identify similar structural features or aspects of the subject disclosure. For purposes of explanation and illustration, and not limitation, an illustrative view of an embodiment of an automatic aircraft lighting control system in accordance with the disclosure is shown in Fig. 1 and is designated generally by reference character 100. Other embodiments and/or aspects of this disclosure are shown in Fig. 2-3D.

With reference to Fig. 1, an automatic aircraft lighting control system 100 can include a control module 102. The control module 102 can be a lighting state processing unit. The lighting state processing unit 102 can be configured to receive imaging data (e.g., as shown by arrow 104) from one or more cameras 106 operatively associated with the aircraft (e.g., on the exterior of an aircraft) and automatically control (e.g., activate and/or deactivate) external aircraft lights 108 based on the imaging data 104. The lighting state processing unit 102 can be further configured to receive aircraft data (e.g., as shown by arrow 110) from one or more aircraft systems 112 and automatically control the external aircraft lights 108 based on the aircraft data 110.

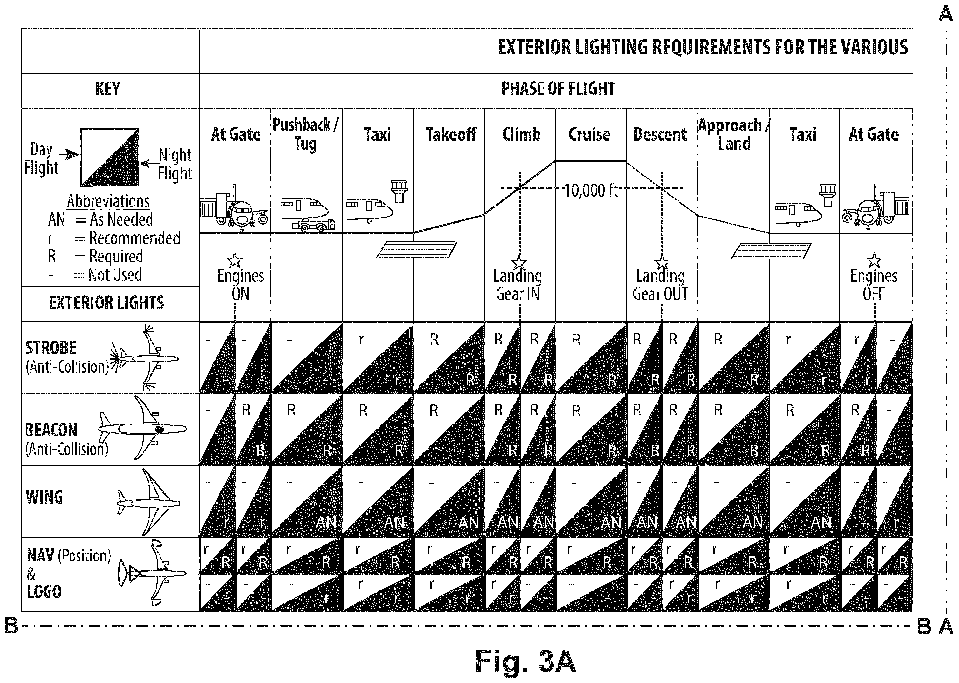

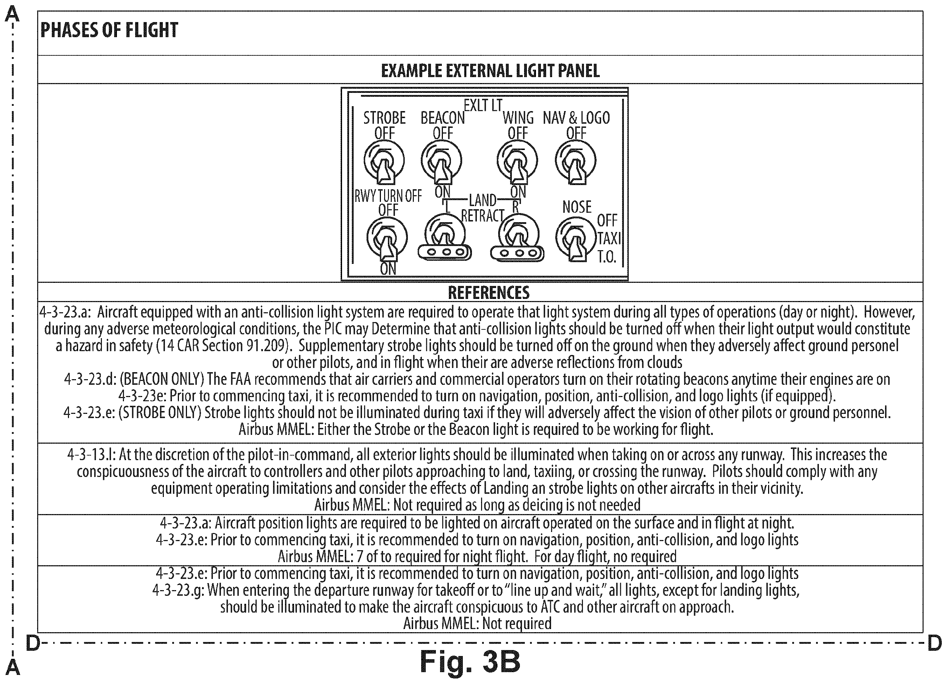

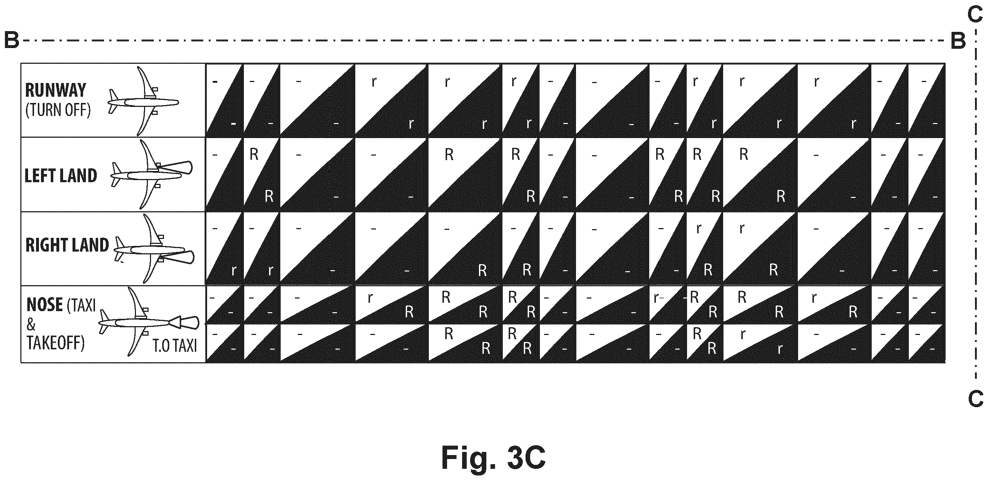

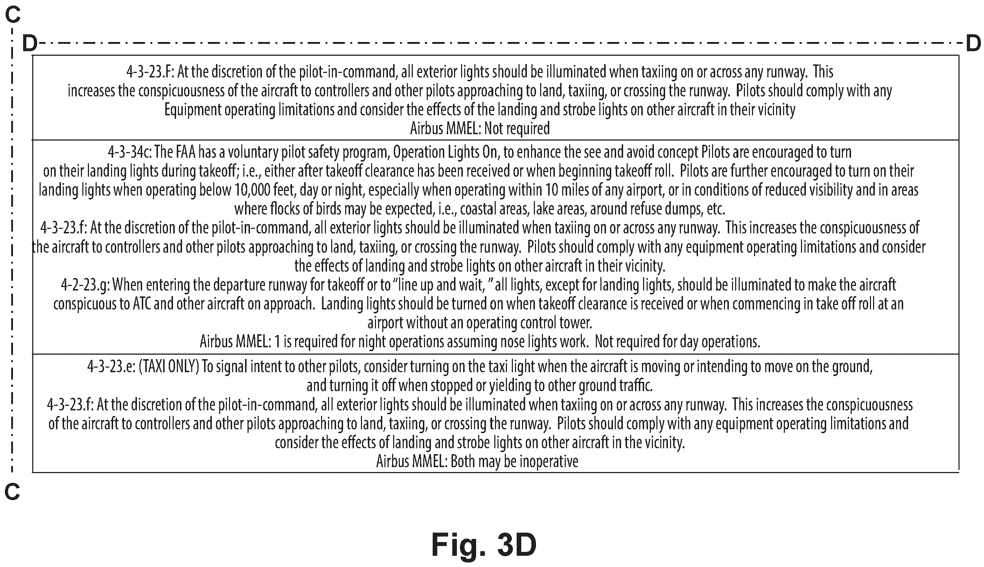

In certain embodiments, the lighting state processing unit 102 can be configured to activate and/or deactivate the exterior aircraft lights 108 based on known light settings (e.g., see Fig. 3A-3D) for commercial aircraft external light systems. The known light settings can vary based on at least one of external light conditions, weather/visibility conditions, and/or phase of flight. In certain embodiments, each of the exterior aircraft lights 108 can be controlled independently.

In certain embodiments, the lighting state processing unit 102 can include a situational awareness module 114 configured to determine which external aircraft lights 108 to activate and/or deactivate based on at least one of the imaging data 104 and/or the aircraft data 110. The lighting state processing unit 102 can include an image processing module 116 configured to be operatively connected to the one or more cameras 106 to receive imaging data 104 therefrom. The image processing module 116 can process videos/images from the one or more cameras 106 to determine what the one or more cameras 106 are viewing and relate these videos/images to various factors such as weather, flight phase, location, etc. For example, the one or more cameras 106 can detect clouds, rain, location from ground, horizon, location on a tarmac, among other conditions and relate this information to the image processing module 116 to be processed before being sent to the situational awareness module 114. The image processing module 116 can be connected to the situational awareness module 114 to send image processing data 104 thereto. The situational awareness module 114 can be configured to receive the image processing data 104 to output one or more control signals based on the image processing data 114. For example, the situational awareness module 114 can fuse external video AI/NΠ, analytics with in-scene dynamic range measurements and traditional aircraft signal data to provide a higher level of control fidelity.

In certain embodiments, the imaging data 104 can include at least one of weather data, flight phase data, location of aircraft data, obstruction data, and/or safety issue data. Once the image processing unit 116 processes the image/videos from the one or more cameras 106, this information is sent to the situational awareness algorithm 114 to implement certain lights based on the various conditions. Any other suitable data configured to allow the situational awareness module 114 to relate the data to one or more lights is contemplated herein.

In certain embodiments, the lighting state processing unit 102 can be further configured to receive aircraft data (e.g., as shown by arrow 110) from one or more aircraft systems 112 and automatically control the external aircraft lights 108 based on the aircraft data 110. In certain embodiments, the aircraft data 110 can include at least one of engine data, altitude data, speed data, and/or aircraft weight on wheels data. The situational awareness module 114 can be configured to determine which external aircraft lights 108 to activate and/or deactivate based on at least one of the imaging data 104 and/or the aircraft data 110.

In certain embodiments, the automatic aircraft lighting control system 100 can further include an exterior lighting control unit 118 configured to be operatively connected to the situational awareness module 114. The exterior lighting control unit 118 can be configured to provide a status 117 (e.g., a screen, lights, or other suitable indicator) of the exterior aircraft lights to flight crew.

In certain embodiments, the exterior lighting control unit 118 can further include pilot manual override control 120 configured to provide input to the exterior lighting control unit 118. The pilot manual override controls 120 provides the capability to activate an automatic mode or deactivate the automatic mode allowing the pilot to select a mode of operation between the automatic mode and the manual mode. In certain embodiments, each light control can include automatic mode state, a manual ON state, and a manual OFF state. Any other suitable arrangement to activate or deactivate automatic mode and manual control of one or more lights, a group of lights, or all lights is contemplated herein.

In certain embodiments, in the automatic mode, one or more of the exterior aircraft lights 108 are controlled solely by the lighting state processing unit 102 without pilot interference. In certain embodiments, in the manual mode, the automatic mode can be overridden to manually control one or more of the exterior aircraft lights 108 via the pilot override control panel 120.

With reference to the chart 215 shown in Fig. 2 and enlarged in Fig. 3A-3D, the chart 215 shows recommended and required light settings for a commercial aircraft external light system. For example, 16 different external lights are shown (e.g., L/R). There are 10 or more distinct flight phases shown in the chart that can affect light state. The chart also shows that external light state can be affected by day vs. night conditions and external weather/visibility variability. There can be more than 100 unique potential lighting situations in a single aircraft flight.

In accordance with at least one aspect of this disclosure, a lighting state processing unit 102 can include a situational awareness module 114 configured to determine when to control exterior aircraft lights 108 based on at least one of imaging data 104 and/or aircraft data 110. The situational awareness module 114 can be configured to receive the imaging data 104 from an image processing module 116. The image processing module 116 can be configured to receive the image processing data 104 form at least one exterior aircraft camera 106.

In certain embodiments, the situational awareness module 114 can be configured to communicate with an exterior lighting control box 118. The exterior lighting control box 118 can be configured to be operatively connected to the situational awareness module 114 and configured to display a status on a display 117 of the exterior aircraft lights 108 to flight crew.

In accordance with at least one aspect of this disclosure, a non-transitory computer readable medium can include computer executable instructions for performing a method. The method can include receiving imaging data 104 from one or more exterior aircraft cameras 106, sending the imaging data 104 to an image processing module 116, receiving the image processing data 104 and aircraft data 110 within a situational awareness module 114 and determining when to activate/deactivate the exterior aircraft lights 108 based on the image processing data 104 and the aircraft data 110 received within the situational awareness module 114.

With reference to Fig. 2, another embodiment of an automatic aircraft lighting control system 200 is shown. The automatic aircraft lighting control system 200 can include a control module 202. The control module 202 can be configured to receive imaging data (e.g., as shown by arrow 204) from one or more cameras 206 operatively associated with the aircraft (e.g., on the exterior of an aircraft) and automatically control (e.g., activate and/or deactivate) external aircraft lights 208 (not shown) based on the imaging data 204. The control module 202 can be further configured to receive aircraft data (e.g., as shown by arrow 210) from one or more aircraft systems and 212 and automatically control the external aircraft lights 208 based on the aircraft data 210. The aircraft data can be aircraft bus data and can include ARNC data, engine information (e.g., on/off), altitude, speed, and weight on wheels. The control module 202 can be configured to receive aircraft lighting logic 215 from a known data base which includes known exterior lighting requirements for various phases of flight (e.g., chart from Fig. 3A-3D).

In certain embodiments, the control module 202 can include a lighting state decision module 214 configured to determine which external aircraft lights 208 to activate and/or deactivate based on at least one of the imaging data 204 and/or the aircraft data 210. The control module 202 can include an aircraft environmental and flight phase module 216 and a local light level module 217 configured to be operatively connected to the one or more cameras 206 to receive imaging data 204 therefrom. The aircraft environmental and flight phase module 216 and a local light level module 217 can be connected to the lighting state decision module 214 to send image processing data 204 thereto. The s lighting state decision module 214 can be configured to receive the image processing data 204 to output one or more control signals based on the image processing data (e.g., commanded lighting state 219).

The aircraft environmental and flight phase module 216 is configured to determine object detection data, weather data, phase of flight data, location on a tarmac/runway, obstructions, and safety issues, among other things. The local light level module 217 can be configured to determine scene processing to provide light levels found in a frame and create and maintain a grid data structure to store the current light levels within the frame among other things.

The control module 202 can be in communication with pilot manual override controls 213. The control module 202 can be configured to communicate pilot manual override controls 213 to an exterior lighting control unit 218 (not shown). Exterior lighting control unit 218 is as described in detail above with respect to exterior lighting control box 118.

In certain embodiments, an external aircraft camera-based system can use AI/NΠ, video analytics to identify when each type of external lights should be activated or deactivated and control their state automatically without additional pilot workload required. Certain embodiments of a lighting control system can use a combination of CV and object level AI/NΠ, processing to provide additional functionality and scene detection accuracy. Certain embodiments of a lighting control system can visually determine external light levels (e.g., day, night, dusk, inclement weather, direct sunlight with shadows, etc.). Certain embodiments of a lighting control system can visually determine aircraft location (e.g., gate, taxiway, runway, flight, etc.). Certain embodiments of a lighting control system can visually determine aircraft engine and aircraft movement status. Certain embodiments of a lighting control system can visually determine the functional state and brightness levels of each external light. Certain embodiments of a lighting control system can receive and analyze aircraft contextual data (e.g., ARINC 429, discrete I/O) to supplement the visual data capture. Certain embodiments of a lighting control system can independently control every external light (e.g., there are no right/left pairs). Certain embodiments of a lighting control system can visually determine the ideal light state (e.g., ON/OFF) to provide maximum visibility to the flight deck and to other surrounding aircraft/vehicles. Certain embodiments of a lighting control system can perform maintenance functions around light strobe counting, light output intensity, and light output disturbances which can help to prevent unsafe situations in which exterior lighting fails in flight and pilot is unaware.

In certain embodiments, a lighting control system can allow the flight deck crew to see the commanded state of each exterior light via the overhead cockpit lighting panel. Certain embodiments of a lighting control system can also allow for manual pilot override of each of the external light controls. Certain embodiments of an external light switch can have three states (e.g., Auto, On, Off). The Auto setting can allow the system to automatically control the exterior lights. The On/Off settings can allow the pilot to manually override the automatic setting and control the lights manually.

In certain embodiments, a lighting control system can be controlled without any manual interference required, reducing pilot workload. Certain embodiments of a system can automatically identify when to activate and deactivate external aircraft lights. Certain embodiments of a system can automatically and independently control each exterior light to maximize aircraft exterior visibility. Certain embodiments of a system can provide efficiency and reliability for commercial aircraft OEM's and pilots that automatic external light control is helpful and able to reduce pilot workload reliably.

In certain embodiments, a system can fuse external video AI/NΠ, analytics with in-scene dynamic range measurements and traditional aircraft signal data to provide a higher level of control fidelity. In certain embodiments, a system can be used in aerospace application for external light control (e.g., automotive systems for external light control based on external light levels only). Any other suitable use is contemplated herein.

Certain embodiments of this disclosure can reduce pilot workload, potential pilot error, and reduce overall external lighting power consumption (e.g., lights not on when they are not needed to save energy). Certain embodiments of a system can result in increased safety and/or avoidance of ground collisions if external lights are not manually set to the correct states by the pilot. Certain embodiments of a system can support transition to Single Pilot Operations (SPO) workload reduction and autonomous aircraft. A system can help save the life of light elements (e.g., they are only on when they need to be). Certain embodiments of a lighting control system can determine when lights are broken or failed and can sense light intensity and quality of light from camera (e.g., by sending warning signals). Certain embodiments of a lighting control system can have increased safety by providing the ability to alert crew to in-flight lighting failures. Certain embodiments of a lighting control system can have increased product reliability by providing ability to monitor lights dimming over time and to count light activation/strobes to allow the aircraft operator to anticipate and plan for exterior light replacements.

Traditional methods of controlling the external aircraft lights require manual pilot control actions to modify the state of external lights. For example, for traditional aircraft lighting control systems, pilots manually evaluate their aircraft situation and surroundings and determine when each type of external lights should be active or inactive. This causes more workload and potential distractions for the flight deck crew.

Further, traditional aircraft lighting systems do not allow independent operation of a set of lights (e.g., right, and left side). Under certain circumstances, lights on one side of the aircraft would be helpful while lights on the opposite side of the aircraft would degrade the visibility of the scene. (i.e., Bright sun on one side of the aircraft creating a dark shadow on the opposite side under the wing.)

Embodiments can include any suitable computer hardware and/or software module(s) to perform any suitable function (e.g., as disclosed herein). Any suitable method(s) or portion(s) thereof disclosed herein can be performed on and/or by any suitable hardware and/or software module(s).

As will be appreciated by those skilled in the art, aspects of the present disclosure may be embodied as a system, method, or computer program product. Accordingly, aspects of this disclosure may take the form of an entirely hardware embodiment, an entirely software embodiment (including firmware, resident software, micro-code, etc.), or an embodiment combining software and hardware aspects, all possibilities of which can be referred to herein as a "circuit," "module," or "system." A "circuit," "module," or "system" can include one or more portions of one or more separate physical hardware and/or software components that can together perform the disclosed function of the "circuit," "module," or "system", or a "circuit," "module," or "system" can be a single self-contained unit (e.g., of hardware and/or software). Furthermore, aspects of this disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of this disclosure may be written in any combination of one or more programming languages, including an object oriented programming language such as Java, Smalltalk, C++, or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of this disclosure may be described above with reference to flowchart illustrations and/or block diagrams of methods, apparatus (systems) and computer program products according to embodiments of this disclosure. It will be understood that each block of any flowchart illustrations and/or block diagrams, and combinations of blocks in any flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in any flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus, or other devices to produce a computer implemented process such that the instructions which execute on the computer or other programmable apparatus provide processes for implementing the functions/acts specified herein. Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of "

Any suitable combination(s) of any disclosed embodiments and/or any suitable portion(s) thereof are contemplated herein as appreciated by those having ordinary skill in the art in view of this disclosure, provided they fall within the scope of the invention as defined by the claims.

The embodiments of the present disclosure, as described above and shown in the drawings, provide for improvement in the art to which they pertain. While the subject disclosure includes reference to certain embodiments, those skilled in the art will readily appreciate that changes and/or modifications may be made that fall within the scope of the claims.

## Claims

1. An automatic aircraft lighting control system, comprising:
a control module (202) configured to:
receive imaging data from one or more cameras (106) operatively associated with the aircraft; and
automatically control external aircraft lights (108) based on the imaging data.

2. The automatic aircraft lighting control system of claim 1, wherein the control module is further configured to receive aircraft data from one or more aircraft systems and automatically control the external aircraft lights based on the aircraft data.

3. The automatic aircraft lighting control system of claim 2, wherein the control module includes a situational awareness module (114) configured to determine which external aircraft lights to activate and/or deactivate based on at least one of the imaging data and/or the aircraft data.

4. The automatic aircraft lighting control system of claim 3, wherein the control module includes an image processing module (116) configured to be operatively connected to the one or more cameras to receive imaging data therefrom, wherein the image processing module is connected to the situational awareness module to send image processing data thereto, wherein the situational awareness module is configured to receive the image processing data to output one or more control signals based on the image processing data.

5. The automatic aircraft lighting control system of any preceding claim, wherein the imaging data includes at least one of weather data, flight phase data, location of aircraft data, obstruction data, and/or safety issue data.

6. The automatic aircraft lighting control system of claim 2 or any claim dependent thereon, wherein aircraft data includes at least one of engine data, altitude data, speed data, and/or aircraft weight on wheels data.

7. The automatic aircraft lighting control system of claim 3 or any claim dependent thereon, further comprising an exterior lighting control box (118) configured to be operatively connected to the situational awareness module and configured to display a status of the exterior aircraft lights to flight crew.

8. The automatic aircraft lighting control system of claim 7, wherein the exterior lighting control box includes a control panel (120) having an automatic mode and a manual mode, and optionally wherein in the automatic mode the exterior aircraft lights are controlled solely by the control module without pilot interference and/or wherein in the manual mode, the automatic mode can be overridden to manually control the exterior aircraft lights via an on/off switch on the control panel.

9. The automatic aircraft lighting control system of claim 4, wherein the control module is configured to activate and/or deactivate the exterior aircraft lights based on known light settings for commercial aircraft external light systems, wherein the known light settings vary based on at least one of external light conditions, weather/visibility conditions, and/or phase of flight.

10. The automatic aircraft lighting control system of any preceding claim, wherein each of the exterior aircraft lights is controlled independently.

11. A control module, comprising:
a situational awareness module (114) configured to determine when to control exterior aircraft lights based on at least one of imaging data and/or aircraft data.

12. The control module of claim 11, wherein the situational awareness module is configured to receive the imaging data from an image processing module (116).

13. The control module of claim 12, wherein the image processing module is configured to receive the image processing data from at least one exterior aircraft camera (108).

14. The control module of any of claims 11 to 13, wherein the situational awareness module is configured to communicate with an exterior lighting control box (118), the exterior lighting control box configured to be operatively connected to the situational awareness module and configured to display a status of the exterior aircraft lights to flight crew.

15. A non-transitory computer readable medium including computer executable instructions for performing a method, the method comprising:
receiving imaging data from one or more exterior aircraft cameras (108);
sending the imaging data to an image processing module (116);
receiving the image processing data and aircraft data within a situational awareness module (114); and
determining when to activate/deactivate the exterior aircraft lights (108) based on the image processing data and the aircraft data received within the situational awareness module.
